# EUROPÄISCHE PATENTSCHRIFT

(11) **EP 2 669 109 B1**
(45) Veröffentlichungstag und Bekanntmachung des Hinweises auf die Patenterteilung: **04.03.2015**
(21) Anmeldenummer: 12169957.3
(22) Anmeldetag: 30.05.2012
(51) Int. Cl.: B60K 35/00, G05D 1/02, G06F 3/01, G01C 21/36, B60W 50/14, B62D 15/02, G06F 3/0488

(54) **Manöverassistenzsystem**
Manoeuvre assistance system
Système d'assistance de manoeuvre

(43) Veröffentlichungstag der Anmeldung: 04.12.2013
(73) Patentinhaber: Technische Universität Darmstadt, 64289 Darmstadt (DE)
(72) Erfinder: Franz, Benjamin, 64287 Darmstadt (DE); Kauer, Michaela, 64579 Gernsheim (DE); Thom, Stephan, 64293 Darmstadt (DE)
(74) Vertreter: Stumpf, Peter

(56) Entgegenhaltungen:
- EP-A1- 1 967 821
- DE-A1-102010 022 620
- JP-A- 2011 170 844
- US-A1- 2005 154 505
- US-A1- 2009 278 915
- US-A1- 2009 287 367

## Beschreibung

Die Erfindung betrifft eine Vorrichtung eines Manöverassistenzsystems zur teilautomatischen Ausführung von Manövern.

Das Einsatzgebiet von Manöverassistenzsystem umfasst alle Arten von Vorrichtung, welche steuerbare Bewegungen aufweisen. Beispielhaft wird im Folgenden auf den Einsatz in Fahrzeugen eingegangen. Deshalb wird von Fahrmanövern und Fahrer gesprochen.

Dem aktuellen Stand der Technik entsprechende Manöverassistenzsysteme besitzen oftmals Bedienelemente in einer festen Anordnung für die Auswahl einzelner Fahrmanöver (z.B. in DE 102010022620 beschrieben).

Der nächstliegende Stand der Technik ist in der DE 102010022620 zu sehen.

Auch das Anzeigen des aktuellen Fahrwegs und/oder weiterer Fahrparameters wie Bremsweg oder Zeitlücke bzw. Abstand entspricht dem aktuellen Stand der Technik. Die Einblendung erfolgt üblicherweise über ein separates Display (z.B. DE102007028401).

Nachteilig hierbei ist, dass durch die fehlenden Situationsadaption der Manöverassistenzsysteme der genannten Schriften, die Eingaben durch den Nutzer bei nicht in ein festes Bedienschema einordbaren Manövern z.B. Fahrstreifenwechsel in mehrspurigen Kreisverkehren, "halb-rechtes" Abbiegen etc. durch das Manöverassistenzsystem entweder interpretiert werden müssen oder der Benutzer Zeit und Konzentration aufwenden muss um dem System hier eindeutige Befehle zu geben.

Aufgabe der vorliegenden Erfindung ist es, die Nachteile des Standes der Technik mittels einer situationsadaptiv angepassten und richtungskorrekten Anzeige möglicher Manöver zu beseitigen bzw. zu umgehen, um so die Belastung des Fahrers zu reduzieren, damit dieser seine Aufmerksamkeit auf die wichtigen Teile der Fahraufgabe lenken kann (z.B. Manöverauswahl oder Überprüfung der Automation)

Gelöst wird diese Aufgabe durch eine Vorrichtung mit den Merkmalen des Anspruchs 1. Vorteilhafte Ausführungsformen und Weiterbildungen der vorliegenden Erfindung ergeben sich aus den Unteransprüchen.

Ein wesentlicher Unterschied der Erfindung zu bekannten Verfahren besteht darin, dass dem Fahrer situationsadaptiv Fahrmanöver zur Auswahl angeboten werden. Dieser wählt davon ein Manöver aus. Dieses wird aktiviert und solange automatisch durchgeführt, bis es ausgewählte entweder abgeschlossen ist oder durch ein Eingreifen vom Fahrzeug oder ein Eingreifen vom Fahrer abgebrochen wird.

Bei teilautomatisierten Manövern handelt es sich um Manöver, welche der Fahrer auswählt und die dann vom Fahrzeug ausgeführt werden. Diese umfassen insbesondere automatisiert durchgeführtes Beschleunigen, automatisiert durchgeführte Fahrstreifenwechsel, automatisiert durchgeführtes Bremsen, automatisiert durchgeführtes Überholen und/oder automatisiert durchgeführtes Abbiegen. Ein Manöverassistenzsystem im Sinne der Erfindung ist ein System, welches eines oder mehrere der vorgenannten teilautomatisierten Manöver durchführen kann.

Um dem Fahrer eine Auswahl zu erleichtern und die Konzentration des Fahrers nicht unangemessen zu beeinträchtigen ist es vorgesehen, dass die jeweils aktuell angebotenen Fahrmanöver optisch angezeigt werden. Die Anzeige der angebotenen Fahrmanöver erfolgt dabei situativ, richtungskorrekt und auch ortskorrekt schon vor der Ausführung des Fahrmanövers.

Situationsadaptiv angeboten heißt, dass nur diejenigen Fahrmanöver, welche eine kontinuierlich im Hintergrund durchgeführte Plausibilitätskontrolle bestehen, zur Auswahl angeboten werden. Dies geht damit umher, dass auch nur die zur Auswahl angebotenen Fahrmanöver optisch angezeigt werden. Der Fahrer kann dann auf einen Blick erfassen, welche Fahrmanöver situationskonform bzw. situationsangepasst sind und schneller und zielgerichteter eine Entscheidung treffen. Die Konzentration des Fahrers wird auf diese Weise so gering wie möglich beeinträchtigt. Die Fahrmanöver können nach der Auswahl durch den Fahrer zuverlässig in angemessener Weise vorausberechnet und durchgeführt werden, so dass ein flüssiges Fahren möglich ist.

Richtungskorrekt heißt, dass sich die Manöver für den Fahrer subjektiv richtig angezeigt werden. Dies kann beispielsweise realisiert werden, dass sich die Manöveranzeige auf der gleichen Seite befindet, in die sich die resultierende Fahrzeugtrajektorie ändert z.B. wird das Manöver "rechts abbiegen" auf der in Fahrrichtung rechten Seite des Anzeigeelements angezeigt. Richtungskorrekt im Sinne der Erfindung heißt aber auch, dass zusätzlich eine Gewichtung innerhalb der Manöver stattfindet, so werden Manöver, die die Fahrzeugtrajektorie stärker ändern weiter außen angezeigt. So werden beispielweise Manöver für Abbiegevorgänge im Allgemeinen weiter außen angezeigt als Manöver für Fahrstreifenwechselvorgänge.

Des Weiteren ist zuzugsweise vorgesehen, dass das Manöverassistenzsystem es ermöglicht auch Manöver und/oder Trajektorien für Manöver darzustellen, welche vorausgewählt aber noch nicht beauftragt wurden. So wird dem Fahrer die Wahl des optimalen Manövers erleichtert.

Um eine einfache und rasche Information des Fahrers über den derzeitigen Zustand des Manöverassistenzsystems und die in diesem Moment zur Verfügung stehenden Fahrmanöver zu ermöglichen, ist vorzugsweise vorgesehen, dass das Fahrerassistenzsystem eine Anzeigevorrichtung aufweist. Dabei handelt es sich vorzugsweise um ein in die Windschutzscheibe projiziertes kontaktanaloges Head-up-Display. Es sind natürlich auch andere optische oder akustische Anzeigevorrichtungen denkbar (z.B. ein TFT oder ein Matrix-Display).

Des Weiteren ist vorzugsweise vorgesehen, dass das Fahrzeug mindestens eine von der Anzeigevorrichtung separierte oder separable Bedienvorrichtung aufweist. Bei dieser Bedienvorrichtung kann es sich beispielsweise um einen Touchscreen handeln, welcher sich vorzugsweise mit dem Finger oder einem Stift als Eingabeelement bedienen lässt. Aber auch die Verwendung eines Trackpoints, Joysticks, Dreh-Rück-Stellers, Hat Switches, Trackballs oder auch eines anderen Eingabeelements ist möglich. Diese Trennung hat zur Folge, dass der Fahrer zum Bedienen nicht mehr auf die Bedienvorrichtung schauen muss. Außerdem ist so eine flexiblere Anpassung von Bedienvorrichtung und Anzeige möglich.

Außerdem wird vorzugweise bei jedem ausgewähltem Manöver schon vor der Bestätigung eine Vorschau der Fahrzeugtrajektorie während dieses Manövers angezeigt, bevor dieses tatsächlich ausgelöst oder verworfen wird. Dadurch kann der mögliche zukünftige Zustand des Fahrzeugs eindeutig beschrieben werden.

Um dem Fahrer eine intuitivere Bedienung des Manöverassistenzsystems zu ermöglichen ist vorzugsweise eine flexible Anpassung mindestens eines Bediengeräts an die aktuell verfügbaren Fahrmanöver vorgesehen. Dies kann beispielsweise über veränderte Optik oder Haptik der Bedienvorrichtung erfolgen.

In einer weiteren Ausführungsform der Erfindung ist es dem Fahrer möglichen eine Selektion eines Manövers vorzunehmen, ohne dass damit gleichzeitig eine Beauftragung dieses Manövers erfolgt.

Während der Fahrt wird die Fahrzeugtrajektorie der Fahrspur durch das Manöverassistenz auf Plausibilität, Sicherheit (Kollisionsfreiheit) und eventuell auch auf Komfort überprüft und gegebenenfalls korrigiert. Das Fahrzeug fährt die Trajektorie anschließend ab.

Da bei der Führung von Fahrzeugen nicht nur die Fahrzeugtrajektorie, sondern auch einzelne Fahrzeugparameter (beispielweise Zeitlücke zum vorausfahrenden Fahrzeug, laterale Position im Fahrstreifen oder Wunschgeschwindigkeit) von großer Bedeutung sind, ist es in einer bevorzugten Ausführungsform der Erfindung vorgesehen, die Bedienvorrichtung auch zum Verändern von Trajektorienparametern zu nutzen.

Bei der Führung von Fahrzeugen gibt es Situation bei denen es sinnvoll ist nicht nur jedes Fahrzeug separat zu steuern, sondern eine Mehrzahl von Manöverassistenzsystems zum koordinierten Durchführen von Manövern (z.B. bei Fahrzeugen, die in Kolonne fahren) zu nutzen. Deshalb ist in eine weiteren Ausführungsform vorgesehen, bei der bei mindestens zwei erfindungsgemäße Manöverassistenzsystem Manöver ausgewählt und dann koordiniert ausgeführt werden können.

Ausführungsbeispiele der vorliegenden Erfindung werden nun anhand der beigefügten Zeichnungen näher erläutert. Dabei zeigen:
Fig. 1 A bis C eine schematische Ansicht durch eine Windschutzscheibe und schematische Ansicht der Bedienung während einer Manövereinleitung unter Änderung der Fahrzeugtrajektorie
Fig. 2 A bis C eine schematische Ansicht durch eine Windschutzscheibe und auf die Bedienelemente während einer Manövereinleitung unter Änderung der Fahrzeuggeschwindigkeit und
**Fig. 3** eine Übersicht über die Anordnung der Manöver.

Die nachfolgend beschriebenen Ausführungsformen stellen bevorzugte Ausführungsbeispiele der vorliegenden Erfindung dar.

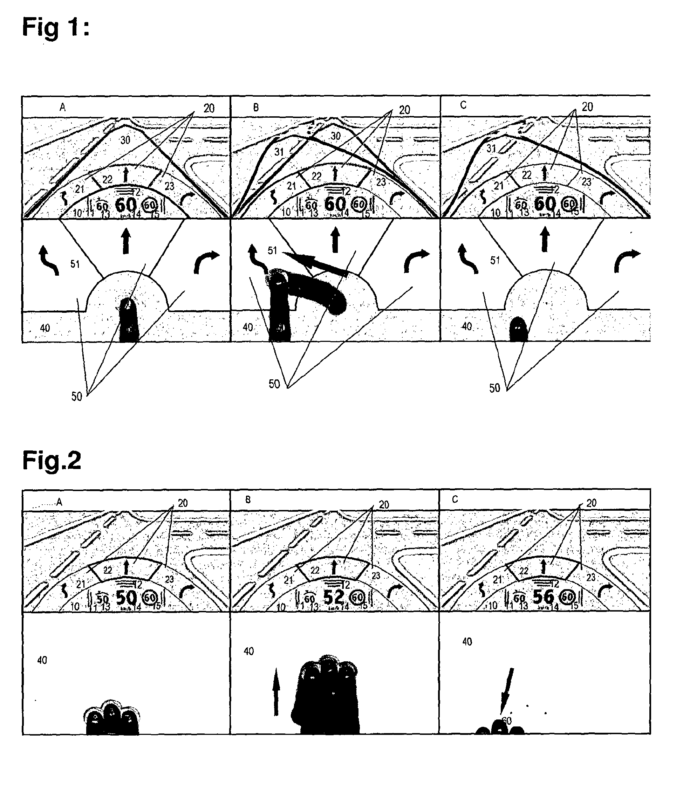

**Fig.1** zeigt symbolisch den Verlauf der Fahrbahn, wie er durch die Windschutzscheibe gesehen werden kann. Beispielhaft dient hier ein Head up Display als Anzeigevorrichtung. Hierbei wird die Anzeige des Manöverassistenzsystems auf die Windschutzscheibe projiziert. Dieses ist unterteilt in den Parameteranzeigebereich **10** und den Steueranzeigebereich **20.** In den Teilabbildungen A bis C wird beispielhaft die Veränderung der Anzeige während eines Manöverauswahlprozesses gezeigt. Der untere Teil von **Fig .1** A bis C zeigt schematisch die Bedienvorrichtung des Manöverassistenzsystems. Dieses Umfasst das Zentalfeld **40** und das Manöverfeld **50.** Des Weiteren ist hier auch die Position des Eingabeelements **60** zu sehen.

Der Parameteranzeigebereich **10** umfasst verschiedene Anzeigen das sind hier die Anzeige für: Position des Fahrzeuges im Fahrstreifen **11,** Zeitlücke zum vorrausfahrenden Fahrzeug **12,** Wunschgeschwindigkeit **13,** aktuelle Geschwindigkeit **14** sowie für die erlaubte Geschwindigkeit **15.**

Der Steuerbereich **20** zeigt die verschiedenen zur Verfügung stehenden Fahrmanöver **21-23.**

In Teilbild A ist eine Fahrsituation dargestellt, in der noch kein fahrtrichtungsänderndes Fahrmanöver beauftragt wird. Es leuchtet somit im Steuerbereich die Manöverinformation "Geraderausfahrt" **22** auf und die zu diesem Manöver gehörende Trajektorie "dem Fahrverlauf folgen" **30** wird eingeblendet. Das System zeigt im Steuermenü die in der dargestellten Situation möglichen Manöver "Fahrstreifenwechsel links" **21** und "Abbiegen rechts" **23** an. Die Bedienvorrichtung wird zum Einleiten eines Manövers mit dem Bedienelement **60** berührt.

Im Teilbild B wird das Manöver "Fahrstreifenwechsel links" **21** ausgewählt, dieses blinkt auf und es wird zusätzlich zur Trajektorie "Dem Fahrverlauf folgen" **30** auch die Trajektorie "Fahrstreifenwechsel links" **31** angezeigt. Zum Einleiten des Manövers wird das Eingabeelement **60** zum Manöverfeld "Fahrstreifenwechsel links" bewegt. Die aktuelle Fahrrichtung ist "Dem Fahrverlauf folgen", diese Trajektorie **30** wird während des Auswahlvorgangs weiterhin auch eingeblendet.

Im Teilbild C ist das Manöver "Fahrstreifenwechsel links" **21** nicht nur wie in Teilbild B ausgewählt sondern auch durch Abheben eines Fingers bestätigt worden. Jetzt wird nur die für dieses Manöver gültige Trajektorie **31** eingeblendet.

**Fig. 2** zeigt symbolisch den Verlauf der Fahrbahn, wie er durch die Windschutzscheibe gesehen werden kann. Beispielhaft dient hier ein Head up Display als Anzeigevorrichtung. Hierbei wird die Anzeige des Manöverassistenzsystems auf die Windschutzscheibe projiziert. In den Teilabbildungen A bis C wird die Veränderung der Anzeige während eines Parameterwahlprozesses gezeigt. Aus Gründen der Übersichtlichkeit sind hier keine Fahrzeugtrajektorien dargestellt.

Der untere Teil von **Fig. 2** A bis C zeigt schematisch das Zentralfeld **40** der Bedienvorrichtung des Manöverassistenzsystems.

In Teilbild A ist eine Fahrsituation dargestellt, in der noch kein parameteränderndes Fahrmanöver beauftragt wird. Die Wunschgeschwindigkeit **13** und aktuelle Geschwindigkeit **14** betragen beide 50 km/h und stimmen somit überein. Im unteren Teil des Teilbildes A ist zu erkennen, wie das Bedienelement **60** das Manöverfeld berührt.

In Teilbild B wird das Bedienelement **60** nach vorne geschoben. Die Zielgeschwindigkeit **13** beträgt jetzt 60 km/h. Das Fahrzeug beschleunigt um seine aktuelle Geschwindigkeit **14** anzupassen.

Im Teilbild **C** wird das Bedienelement **60** vom Manöverfeld **50** abgehoben, um das Manöver abzuschließen.

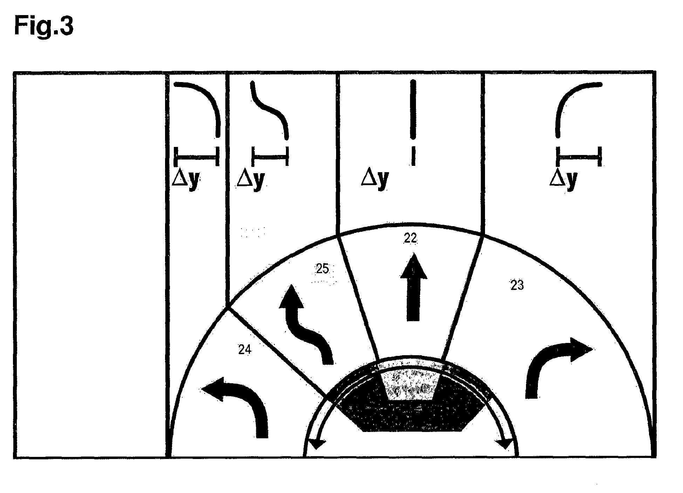

**Fig. 3** zeigt verschiedene Fahrmanöver. Im hier gezeigten Beispiel sind 4 Manöver möglich in zwar Manöver "Abbiegen rechts" **24**, Manöver "Fahrstreifenwechsel rechts" **25,** Manöver "dem Fahrverlauf folgen" **22,** und das Manöver "Abbiegen links" **24.** Entscheidend für die richtungskorrekte Anordnung der Anzeige für das jeweilige Manöver ist dabei der Parameter Δy welcher durch das Manöverassistenzsystem berechnet wird und den Grad der Richtungsänderung des Fahrzeuges bei dem jeweiligen Fahrmanöver beschreibt. So ist Δy beim Manöver "Abbiegen rechts" **24** größer als beim Manöver "Fahrstreifenwechsel rechts" **25** so dass es weiter außen angeordnet ist. Das Manöver "dem Fahrverlauf folgen" ist mittig angeordnet da Δy hier 0 ist.

### Bezugszeichenliste

- **10**: Parameteranzeigebereich
- **11**: Position des Fahrzeuges im Fahrstreifen
- **12**: Zeitlücke zum vorrausfahrenden Fahrzeug
- **13**: Anzeige der Wunschgeschwindigkeit
- **14**: Anzeige der aktuellen Geschwindigkeit
- **15**: Anzeige der erlaubten Geschwindigkeit
- **20**: Manöveranzeigebereich
- **21**: Manöver "Fahrstreifenwechsel links"
- **22**: Manöver "dem Fahrverlauf folgen "
- **23**: Manöver "Abbiegen links"
- **24**: Manöver "Abbiegen rechts"
- **25**: Manöver "Fahrstreifenwechsel rechts"
- **30**: Trajektorie "dem Fahrverlauf folgen"
- **31**: Trajektorie "Fahrstreifenwechsel links"
- **40**: Zentralfeld
- **50**: Manöverfeld
- **51**: Manöverfeld "Fahrstreifenwechsel links"
- **60**: Eingabeelement

## Patentansprüche

1. Vorrichtung eines Manöverassistenzsystems eines Fahrzeugs zur teilautomatischen Ausführung von Manövern (21, 22, 23, 24, 25) wobei sie eine situationsadaptive und richtungs- sowie ortskorrekte Anzeige (10, 20, 50, 51) aufweist, so dass mögliche Manöver (21, 22, 23, 24, 25) und Trajektorien (30, 31) für aktuell durchgeführte und für zukünftige Manöver (21, 22, 23, 24, 25) dargestellt sowie situationsadaptiv Fahrmanöver (21, 22, 23, 24, 25) derart zur Auswahl angeboten werden, dass nur diejenigen Fahrmanöver (21, 22, 23, 24, 25), welche eine kontinuierlich im Hintergrund durchgeführte Plausibilitätskontrolle bestehen, zur Auswahl angeboten werden.

2. Vorrichtung eines Manöverassistenzsystems nach Anspruch 1 **dadurch gekennzeichnet, dass** das Manöverassistenzsystem es ermöglicht, auch Manöver (21, 22, 23, 24, 25) und/oder Trajektorien (30, 31) für Manöver darzustellen, welche vorausgewählt aber noch nicht beauftragt wurden.

3. Vorrichtung eines Manöverassistenzsystems nach Anspruch 1 **dadurch gekennzeichnet, dass** das Fahrzeug eine Anzeigevorrichtung (40) zur Anzeige eines Abbildes der Bedienanordnung (60), sowie der aktuellen und/oder seiner geplanten Trajektorie (30, 31) und mindestens eine von dieser Anzeigevorrichtung separaten, separierbaren und/oder kombinierten Bedienvorrichtung (60) aufweist.

4. Vorrichtung eines Manöverassistenzsystems nach Anspruch 1 und 2 **dadurch gekennzeichnet, dass** das Fahrzeug mindestens eine Bedienvorrichtung (60) umfasst, welche eine situationsadaptive Anpassung an die aktuell verfügbaren Fahrmanöver aufweist.

5. Vorrichtung eines Manöverassistenzsystems nach Anspruch 1 **dadurch gekennzeichnet, dass** das Manöverassistenzsystem es ermöglicht Manöver (21, 22, 23, 24, 25, 30, 31) vorauszuwählen ohne sie zu beauftragen.

6. Vorrichtung eines Manöverassistenzsystems nach einem der vorhergehenden Ansprüche, **dadurch gekennzeichnet, dass** bei jedem ausgewähltem Manöver schon vor der Bestätigung eine Vorschau der Trajektorie des Fahrzeugs während dieses Manövers angezeigt wird, bevor dieses tatsächlich ausgelöst oder verworfen wird.

7. Vorrichtung eines Manöverassistenzsystems nach Anspruch 1 **dadurch gekennzeichnet, dass** das Manöverassistenzsystem es ermöglicht mindestens eine Bedienvorrichtung (60) zum Verändern von Fahr- oder Trajektorienparametern zu nutzen.

8. Vorrichtung eines Manöverassistenzsystems nach Anspruch 1 **dadurch gekennzeichnet, dass** das Manöverassistenzsystem mit mindestens einem weiteren Manöverassistenzsystem welches sich vorzugsweise in einem separatem Fahrzeug befindet Manöver koordiniert ausführen kann.

9. Verfahren zum Betrieb eines Fahrzeuges mit einem Manöverassistenzsystemnach einem der Ansprüche 1 bis 8, wobei das Kraftfahrzeug das Manöverassistenzsystem zur automatischen Ausführung von Fahrmanövern des Fahrzeuges, eine Anzeigevorrichtung (10, 20, 50, 51) und mindestens eine situationsadaptive Bedienvorrichtung (60) des Fahrassistenzsystems aufweist, und wobei mittels einer Anzeigevorrichtung (20) von dem Manöverassistenzsystem aktuell angebotene Fahrmanöver (21, 22, 23, 24, 25, 30, 31) angezeigt werden.

10. Verfahren nach Anspruch 9, **dadurch gekennzeichnet, dass** die aktuell angebotenen Manöver (21, 22, 23, 24, 25, 30, 31) bei Berührung oder Annäherung an die Bedienvorrichtung (60) im Display angezeigt werden.

## Claims

1. A device of a manoeuvring assistance system of a vehicle with partially automatic manoeuvring (21, 22, 23, 24, 25), where the device has a situation-adaptive display that is directionally and locally accurate (10, 20, 50, 51), such that all possible manoeuvres (21, 22, 23, 24, 25) and trajectories (30, 31) for current and future manoeuvres (21, 22, 23, 24, 25) can be displayed and situation-adaptive driving manoeuvres (21, 22, 23, 24, 25) can be offered for selection and only those driving manoeuvres (21, 22, 23, 24, 25) that have a plausibility check running consistently in the background are offered for selection.

2. Device of a manoeuvring assistance system described in claim 1, **characterized by** the fact that the manoeuvring assistance system is able to display manoeuvres (21, 22, 23, 24, 25) and / or trajectories (30, 31) for manoeuvres which are preselected but not yet confirmed.

3. Device of a manoeuvring assistance system described in claim 1, **characterized by** the fact that the vehicle has a display device (40) for displaying an image of the operating unit (60) and the current and / or the planned trajectory (30, 31) and at least one operating unit that is separate or separable from this display device and / or a combined operating unit (60).

4. Device of a manoeuvring assistance system described in claims 1 and 2, **characterized by** the fact that the vehicle comprises at least one operating unit (60) that provides a situation-adaptive adjustment with respect to the currently available driving manoeuvres.

5. Device of a manoeuvring assistance system described in claim 1, **characterized by** the fact that the manoeuvring assistance system allows preselection of manoeuvres (21, 22, 23, 24, 25, 30, 31) without confirming them.

6. Device of a manoeuvring assistance system described in one of the previous claims, **characterized by** the fact that with every preselected manoeuvre prior to confirming, a preview of the trajectory of the vehicle during the manoeuvre is displayed well before it can actually be triggered or discarded.

7. Device of a manoeuvring assistance system described in claim 1, **characterized by** the fact that the manoeuvring assistance system has at least one operating unit (60) that can be used to alter driving and trajectory parameters.

8. Device of a manoeuvring assistance system described in claim 1, **characterized by** the fact that the manoeuvring assistance system can run the manoeuvre in coordination with at least one other manoeuvring assistance system that is preferably located in another vehicle.

9. The procedure to operate a vehicle with a manoeuvring assistance system described in claims 1 to 8 where the vehicle comprises a manoeuvring assistance system for automatically executing driving manoeuvres of the vehicle, a display unit (10, 20, 50, 51) and at least one situation-adaptive operating unit (60) of the driving assistance system, where the driving manoeuvres (21, 22, 23, 24, 25, 30, 31) currently offered by the manoeuvring assistance system are indicated on the display unit (20).

10. The procedure as described in claim 9 is **characterized by** the fact that the manoeuvres currently offered (21, 22, 23, 24, 25, 30, 31) are shown on the display unit when the operating unit (60) is touched.

## Revendications

1. Dispositif d'un système d'assistance aux manoeuvres d'un véhicule pour l'exécution semi-automatique de manoeuvres (21, 22, 23, 24, 25), qui comporte un affichage adaptatif en fonction d'une situation donnée, et reproduisant les directions et les positions effectives (10, 20, 50, 51), de façon à afficher des manoeuvres (21, 22, 23, 24, 25) et des trajectoires possibles (30, 31) pour des manoeuvres en cours et pour des manoeuvres à venir (21, 22, 23, 24, 25) et aussi à proposer des manoeuvres d'itinéraire adaptatives en fonction d'une situation donnée (21, 22, 23, 24, 25), de telle manière que seules les manoeuvres d'itinéraire (21, 22, 23, 24, 25) qui consistent en un contrôle de plausibilité continuellement en arrière-plan, sont proposées à la sélection.

2. Dispositif d'un système d'assistance aux manoeuvres selon la revendication 1 **caractérisé en ce que** ledit système d'assistance aux manoeuvres permet d'afficher également des manoeuvres (21, 22, 23, 24, 25) et/ou des trajectoires (30, 31) pour des manoeuvres qui ont été présélectionnées, mais non encore traitées.

3. Dispositif d'un système d'assistance aux manoeuvres selon la revendication 1 **caractérisé en ce que** le véhicule comporte un dispositif indicateur (40) pour l'affichage d'une image de l'agencement de commande (60), ainsi que de la trajectoire actuelle et/ou de sa trajectoire prévue (30, 31) et au moins un dispositif de commande (60) séparé du dispositif indicateur, séparable et/ou combiné.

4. Dispositif d'un système d'assistance aux manoeuvres selon la revendication 1 et 2 **caractérisé en ce que** le véhicule comprend au moins un dispositif de commande (60) qui comporte un ajustement adaptatif aux manoeuvres de l'itinéraire disponibles actuellement, en fonction d'une situation donnée.

5. Dispositif d'un système d'assistance aux manoeuvres selon la revendication 1 **caractérisé en ce que** ledit système d'assistance aux manoeuvres permet de présélectionner des manoeuvres (21, 22, 23, 24, 25, 30, 31) sans avoir à les traiter.

6. Dispositif d'un système d'assistance aux manoeuvres selon l'une quelconque des revendications précédentes, **caractérisé en ce que** lors de chaque manoeuvre sélectionnée 10 et avant même la confirmation, une prévisualisation de la trajectoire du véhicule au cours de cette manoeuvre s'affiche, avant que celle-ci ne soit effectivement déclenchée ou rejetée.

7. Dispositif d'un système d'assistance aux manoeuvres selon la revendication 1 **caractérisé en ce que** ledit système d'assistance aux manoeuvres permet d'utiliser au moins un dispositif de commande (60) pour modifier les paramètres d'itinéraire ou de trajectoire.

8. Dispositif d'un système d'assistance aux manoeuvres selon la revendication 1 **caractérisé en ce que** ledit système d'assistance aux manoeuvres peut effectuer des manoeuvres de manière coordonnée avec au moins un autre système d'assistance aux manoeuvres, qui est situé de préférence dans un véhicule séparé.

9. Procédé de fonctionnement d'un véhicule muni d'un système d'assistance aux manoeuvres selon l'une quelconque des revendications 1 à 8, ledit véhicule automobile comportant le système d'assistance aux manoeuvres pour l'exécution automatique de manoeuvres d'itinéraire du véhicule, un dispositif indicateur (10, 20, 50, 51) et au moins un dispositif de commande adaptatif en fonction d'une situation donnée (60) du système d'assistance à la conduite, et les manoeuvres d'itinéraire proposées actuellement (21, 22, 23, 24, 25, 30, 31) par le système d'assistance aux manoeuvres étant affichées au moyen d'un dispositif indicateur (20).

10. Procédé selon la revendication 9 **caractérisé en ce que** les manoeuvres proposées actuellement (21, 22, 23, 24, 25, 30, 31) sont indiquées sur l'afficheur en cas de contact ou de proximité avec le dispositif de commande (60).
